(19) Europäisches Patentamt / European Patent Office / Office européen des brevets

(11) **EP 2 136 133 B1**

(12) **EUROPEAN PATENT SPECIFICATION**

(45) Date of publication and mention
of the grant of the patent:
**22.06.2011 Bulletin 2011/25**

(51) Int Cl.:
***F21V 7/00*** (2006.01)

(21) Application number: **07808950.5**

(22) Date of filing: **07.09.2007**

(86) International application number:
**PCT/SI2007/000029**

(87) International publication number:
**WO 2008/127203 (23.10.2008 Gazette 2008/43)**

(54) **VEHICLE LIGHT COMPRISING A REFLECTOR CONSISTING OF A POLYMERIC MATERIAL**

FAHRZEUGLICHT MIT EINEM REFLEKTOR AUS EINEM POLYMERMATERIAL

LUMIERE DE VEHICULE COMPORTANT UN REFLECTEUR CONSTITUE D'UN MATERIAU POLYMERE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **11.04.2007 SI 200700087
31.08.2007 SI 200700206**

(43) Date of publication of application:
**23.12.2009 Bulletin 2009/52**

(73) Proprietor: **Hella Saturnus Slovenija, Proizvodnja
svetlobne
opreme za motorna in druga vozila, d.o.o.
1000 Ljubljana (SI)**

(72) Inventors:
• **LUBI, Franc
1230 Domzale (SI)**
• **KRALJ, Ales
1000 Ljubljana (SI)**

(74) Representative: **Borstar, Dusan
Nova ulica 11
1230 Domzale (SI)**

(56) References cited:
**JP-A- 2001 155 537     US-B1- 6 450 670**

EP 2 136 133 B1

**Description**

The present invention relates to lighting or signaling equipment for vehicles, in particular to fog lamps and headlights. Still further the invention refers to technical features vehicle headlights, especially to technical of said headlights. Besides, in field of lighting such invention may also relate to fastening of light sources or parts thereof.

The purpose of the invention is to create a small compact headlight with a thermoplastic reflector on the basis of a polymeric material, by which a characteristic size of such reflector is less than 90mm and at the thermal flux P > 0,6 W/cm$^2$, in particular at least P > 1 W/cm$^2$, by which such reflector should be capable to operate reliable and for a long time period in regular conditions within a motor vehicle without any metallic accessories and in particular also without any furnishing of the inner surface of the reflector with any coating.

The invention generally refers to a light, in particular a vehicle light, comprising a polymeric casing and a so-called surface-directing reflector consisting, which consists of a polymeric material. In such an embodiment said reflector is completely surrounded by appropriate casing. Appropriate light source represents a bulb having with incorporated lighting filament, preferably a halogen bulb. Screening of said light source may be obtained either by means of darkening in the area of the light source as such. The solution of light according to the invention is applicable in particular in the field of relatively small vehicle lights, especially fog lights.

Two concepts of lights on the basis of surface-directing lights are commonly applied in the field of small vehicle lights, especially fog lights.

In accordance with the first concept, the rearwards side of the casing is formed by a reflector shell, which is in its circumferential area equipped with appropriate sealing, by means of which a sealed contact is ensured against the remaining portion of said casing. In such embodiment the rear side of said reflector is opened, and that those skilled in the art should know such an embodiment under the term "opened embodiment".

On the contrary, the second concept provides that a reflector is completely surrounded by a corresponding casing, so such an embodiment is commonly know as a "closed embodiment".

The term »surface-directing« reflector is used for marking such kind of headlights, where each desired directing or re-directing of a light beam is performed exclusively thanks to corresponding shape of the reflector as such. Alternatively, in the so called projection headlights each appropriate reflector is used in combination with a condensing lens and appropriate screen.

Regarding said opened embodiment of a headlight, each reflector shell may consist of polymeric, especially thermoplastic materials, which may then be cooled through the rear wall, which is opened towards the circumferential area. Said cooling is namely required due to intensive heating efficiency of the light source. Cooling of said closed embodiments is hindered along the complete circumference of the reflector, since the heat insulating layer of air is present there. Of that reason the small headlights in said closed embodiment, are ordinary manufactured of metal, by which the active surfaces from the optical point of view must then be coated with appropriate layer of appropriate enamel, by means of which then each required optical characteristics are assured. When compared with thermoplastic reflectors in opened embodiments, such metallic reflectors - either made of a metallic plate or of a light casting on the basis of aluminium or magnesium - are essentially heavier and also essentially more difficult from the manufacturing aspects.

Headlights of some greater sizes, by which e.g. the characteristic size $d$ of the reflector is greater than 90mm and by which a light source is used with nominal power $I$ up to 65W, polymeric reflectors may be used also in the closed embodiment without any limitations. Said characteristic size $d$ of the reflector means the height thereof along the vertical axis, which extends throughout the light source, which is positioned approximately in the central position. According to prior art reflectors within such range of dimensions normally consist of thermosetting non-saturated polyesters. Reflectors, where said characteristic size $d$ is below 90 mm, normally belong to small headlights. A characteristic thermal flux density $P$ is defined when said nominal power $I$ of the light source is divided with a square of the characteristic size $d$ in centimeters [cm]. Said relationship may therefore be expressed as $P = I/d^2$. Said square of the characteristic size $d$ is proportional to the outer surface of a small headlight. For example, when the value of diameter is doubled, then the outer surface available for transferring heat outside of the reflector having a similar shape is four times larger.

In the sense of said characteristic thermal flux density, small headlights may be defined by characteristic thermal flux density $P$ > 0,7 W/cm$^2$, while any other headlights are large headlights, where characteristic thermal flux density fulfils the ratio $P$ < 0,7 W/cm$^2$. Especially interesting are those small headlights from the prior art, where said characteristic thermal flux density exceeds $P$ > 1 W/cm$^2$, since the fog lights and the majority of cornering lights as well as certain signaling lights belong to such range. Within this range $P$ > 0,7 W/cm$^2$ and especially $P$ > 1 W/cm$^2$ the use of commercially available amorphous polymers for manufacturing of headlights is extremely limited, since the temperature on the top area of optical surfaces during the use of such headlight is too high. Such problems might e.g. be resolved by using thermally conductive polymeric reflectors (WO03021623), which could then be applied even in the closed embodiment, but the presence of incorporated heat conductive particles would then result in lack of optical characteristic on the surface, so that additional coating would be unavoidable required. Such coating represents an essential expense also by metallic headlights and should be therefore absolutely avoided.

Several attempts are known in the prior art, how to control a thermal flux within such small headlights. Accordingly, several additional measures are suggested in KR 8 200 527 and CA 1,117,503 and also in GB 2,130 353 in order to deal with the so-called hot spot, which occurs above the light source, and these solutions are merely based on providing various metallic inserts in the top area of the inner surface of the reflector. Such metallic inserts then assist in distribution of heat which is concentrated within said hot spot, in order to enable use of some cheaper polymeric materials, since the temperature is usually too high exclusively within a relatively small area of said hot spot. However, such solutions are often unacceptable, among others also due to essentially modifying the appearance of the headlight as such.

Still further, CA 2,297,530 proposes a heat dissipation member, which consists of metal plate and is arranged on the top side of the casing, so that a part of said metal plate is placed on the outer side, and a part thereof is placed on the inner side of said casing. Such accessory may of course lead to certain reduction of heat resistance of the casing, which is a consequence of a relatively low heat conductivity of the polymeric material, of which such casing consists. However, such an accessory cannot reduce heat resistance of the air layer around the reflector, which therefore still remains a great problem.

There is also a proposal in JP 2001155537, in course of resolving of an analogous problem, which occurs in discharging bulbs, by means of an opening arranged on the upper side of the reflector, by means of which the heat flux resulting from the light source is turned in the rearward area of the casing behind the reflector. However, such opening again leads negative impact in regard of the headlight appearance.

In order to resolve the earlier technical problem of creation of a thermoplastic reflector of a small headlight in a closed embodiment, which should withstand a characteristic thermal flux $P > 1$ W/cm$^2$ without the presence of any visible metallic supplements, a headlight is proposed according to the invention, which comprises a reflector with a thermoplastic shell free of any undesired openings or thermo-conductive filling substances or any other additional means, which should serve to control the thermal flux. Several measures are suggested, which are disclosed in more detail in a further description and relate exclusively to a general concept of such reflector with regard to the light source, where said measures are focused to control each thermal conditions, appropriate choice and processing of material of the reflector, as well as to appropriate sizes of the casing with respect to the circumference of the reflector, by which then a desired convection is achieved within the casing behind of the rearward wall of the reflector.

The light source with integrated filament, preferably a filament bulb, but also e.g. a discharging bulb, generates approx. 5 to 10% of its complete power in form of a convective hot air column, which occurs above the glass bulb of the light source. Still further, emission of more than 80% of said power is then performed in the form of IR-radiation (approx. 30% in discharging light sources).

By taking into account these facts, several interactive measures are proposed, which on the basis of mutually related influences with respect to thermal stresses, to which the reflector is exposed, result in possibility of use of a commercial available thermoplastic material by e.g. manufacturing of fog lights in said closed embodiment.

According to the first measure the reflecting surfaces in the upper hemisphere area of the reflector are arranged at an appropriate distance apart from the light source and thermal efficiency thereof. In such a manner appropriate inductive cooling of the generated hot convection air is achieved, while the density of appropriate IR-flow resulting both from light and heat due to incomplete deflection on the reflecting surface of the reflector, is essentially reduced.

According to the second measure the concept of reflector is directed towards collecting of as much as possible of the radiation energy of the light source in order to achieve deflection thereof throughout the outlet opening of the casing of the reflector. The residual energy, of the light source, which is not deflected on the reflector, is normally absorbed by optically inactive portions of the casing, which are often black and arranged below the reflector.

According to the third measure each construction of the casing is adapted with respect to each desired construction of the reflector, by which then a sufficient and appropriate guiding of air flow into an area between the rear wall of the casing and the rearward side of the reflector is enabled, wherein said area is normally not exposed to thermal stresses in a such great extent, so that an additional emission of the generated heat is then enabled via the walls of the casing. According to the fourth measure the thickness of the shell of the reflector in the area between the ribs in the upper hemisphere is essentially reduced with respect to thickness in any other area of the reflector.

The fifth measure provides that the convective hot air column, which is generated above the bulb, is split in the top portion of the reflector into the left and right partial flow, which are then directed towards the space behind of the reflector.

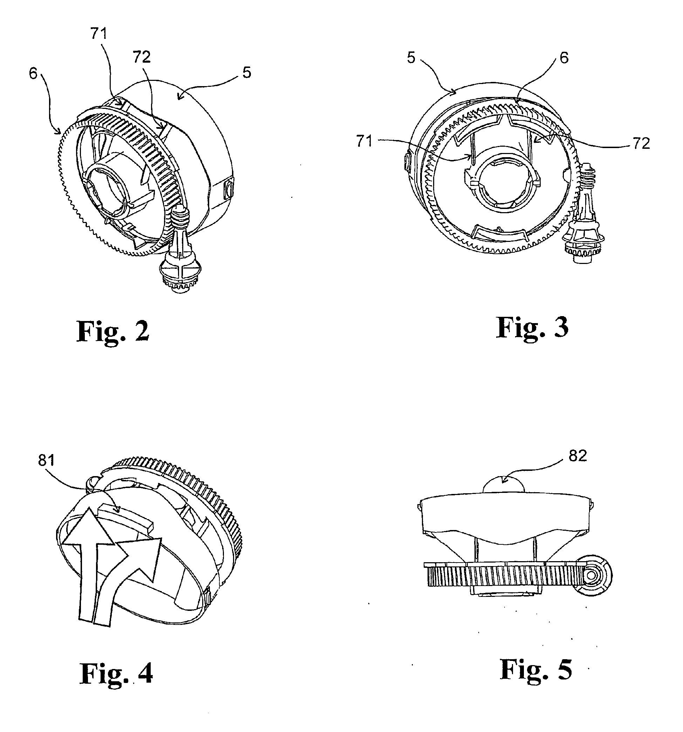

The invention further provides that the mechanical stresses, to which the reflector is exposed within the upper hemisphere thereof due to adjusting each desired position and herewith the height of the light beam, are taken-over by two separate supporting ribs, which are arranged at a desired distance apart from each other, which is e.g. approx. 20 mm (Fig. 2). On such a basis said ribs are removed from the hot area, which is normally present above the bulb. When comparing such approach with earlier placing said supporting ribs into the central area, the head transfer towards the rearward side is essentially easier, and thanks also to such measure any damages of the reflector may easily be eliminated.

Two supplemental processing measures are foreseen, wherein according to the first measure the emission ability of the rearward side of shell of the reflector with respect to heat radiation must be as high as possible (absence of the metallized layer), while according to the second measure also the temperature of the inner surface of the mold during the process of molding the reflector shell must be sufficiently high.

When bearing in mind the thermal resistance of the reflecting surface it is namely of a great importance, that also the injection molding process as such is performed at a sufficiently high temperature, by which then the internal tensions, which would otherwise occur within the surface area and result in reduction of temperature resistance, may herewith be avoided. In the practical embodiment, which will be explained in a further description, the reflector shell was manufactured of a polyether sulphone at the temperature above 150°C.

Accordingly, the present invention generally relates to a vehicle light comprising a reflector consisting of a polymeric material, in particular a headlight for motor vehicles, comprising appropriate casing made of polymeric material, which is furnished on its front side with a transparent glass consisting of appropriate material on the basis of minerals or polymers, as well as of at least approximately circular or oval-shaped surface-directing reflector, which is mounted within said casing and surrounded therewith and consists of a polymeric material and is moreover on its reflection surface furnished with a thin reflecting layer on the basis of aluminium, while on the rearward surface thereof appropriate means are foreseen for connecting said reflector with appropriate assembly adapted for positioning said reflector with respect to said cover, by which said light further comprising a bulb with integrated filament, which is used as a light source and is placed in the central position of said reflector, and wherein a characteristic thermal flux density corresponds to $P > 0,6$ W/cm$^2$, while the characteristic size $d$ of said reflector, namely a dimension of said reflector along the vertical axis, which extends through the filament, is generally smaller than approximately 90 mm,

According to the invention said reflector is arranged within the casing in such a manner that the width of a gap between the circumferential portion of said reflector and each neighboring portion of said casing in the area above the bulb is smaller than approximately 3% of the characteristic size of said reflector, and is at the same time greater than approximately 3% of the characteristic size of said reflector in any other area along the circumference of said reflector. Each appropriate connecting means, which are adapted to connect said reflector with appropriate assembly for adjusting each desired position of said reflector with respect to each position of said casing, are arranged outside of the central portion of the upper hemisphere area of said reflector above the bulb where a thickness of the wall of said reflector is preferably smaller than the thickness of any other portions of said reflector. At the same time also a condition must be fulfilled, that the following correlation exists

$$b/P > 17 \qquad [\text{mm cm}^2/\text{W}] \qquad (i),$$

which means that the ratio between the distance of the reflector from the filament of the bulb expressed in centimeters and the a characteristic thermal flux density is greater than 17.

In a preferred embodiment of the invention said means for connecting said reflector with said position adjusting assembly is available in form of two ribs, which are arranged apart from each other, and the thickness of the wall of the reflector between said ribs is smaller than in any other area of said reflector. Said ribs are arranged moreover in such distance apart of each other, that said distance represents at least 20-25% of the characteristic size of the reflector, preferably approx. 22% of the characteristic size of the reflector. Still further, said reflector comprises an area above the bulb, where the air flow, which is generated above the bulb and is then circulating behind the rearward portion of the reflector, is split into two parts i.e. partial flows. The most preferred reflector consists of polyether sulphone, and in particular of an amorphous thermoplastics having a glass-transition temperature $Tg > 210$°C. Such light furthermore preferably belongs to vehicle headlights, namely a front headlight and/or a fog light and/or a signaling light and/or a cornering light and/or an working reflector.

Now the invention will be described on the basis of an embodiment, which is illustrated by means of the enclosed drawing, wherein

Fig. 1 is a longitudinal cross-section in a central plane throughout the vehicle light with integrated reflector consisting of a polymeric material;

Fig. 2 is a perspective rear view of said light;

Fig. 3 is also a perspective rear view of light, when observed under another angle;

Fig. 4 is a schematically shown front perspective view of a reflector of such light; and

Fig. 5 is a top view of the reflector of said light.

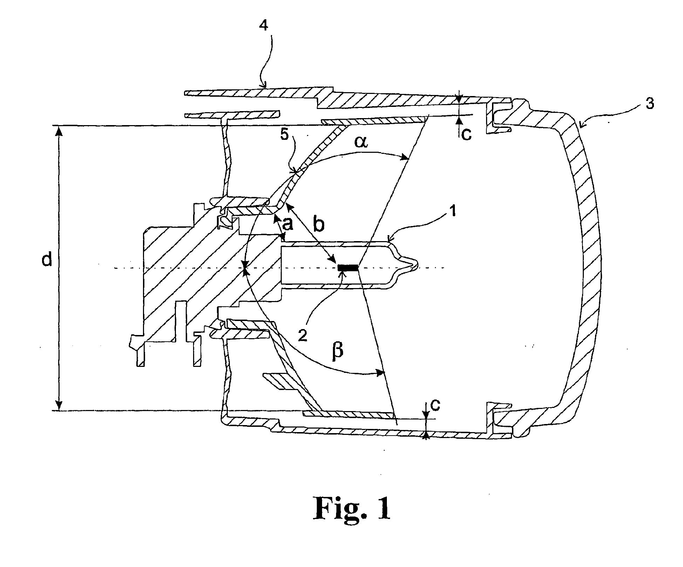

Regarding the embodiment in accordance with Fig. 1, the headlight consists of a polymeric casing 4, which is made of black polybutylen teraphtalate filled with 10% per weight of glass fibers, as well as of a covering mineral glass 3 and of a reflector 5 shell, which is made of amorphous polyether sulphone available as Ultrason 2010 in its natural color, and finally also of a bulb 1, which is a halogene bulb 1 of type H11 with integrated filament 2.

The diameter or the width *d* of said reflector 5 measured along the horizontal axis thereof is approx. 74 mm and along the vertical axis thereof approx. 71 mm, while the gap c between the circumferential area of the reflector 5 and the casing 4 is approx. 3 mm. The distance *a* between the glass bulb 1 and the reflector 5 is approx. 9,5 mm. The distance b between the filament 2 of the bulb 1 and said reflector 5 in this particular case is approx. 18 mm. The angle between the upper rand of said reflector 5 and the axis, which extends through the filament 2 of the bulb 1 is marked with a, while the angle between the bottom rand of said reflector 5 and the axis, which extends through the filament 2 of the bulb 1 is marked with β. In this particular case the characteristic thermal flux density is *P* = 1,15 W/cm$^2$, said angle a, is 110°, and the angle β is 101 °. The glass-transition temperature *Tg* of a dry material of the reflector 5 is approx. 225°C. The reflection surface of said reflector 5 is furnished with a thin layer of aluminium together with appropriate protecting layers.

On the basis of experimental testing a light according to the present embodiment tha conclusion is made that in the case when said distance *b* is shorter than 17 mm damages may occur on the reflector 5 as a consequence of direct absorption of radiation resulting from the filament 2 of the bulb 1 within the reflector 5, which are much greater when said difference is shorter and are increasing in a counter-proportional relationship with respect to a square of said distance.

As empirically ascertained and also verified, said distance *b* [mm] should with respect to the characteristic thermal flux density *P* be maintained within the relationship at least approximately *b*/*P* = 17. In this particular embodiment the height of a light beam is adjusted by means of an adjusting ring 6, which is visible in Fig. 2 and 3, and not shown in Fig. 1. Two ribs 71, 72 are foreseen on the rearward side of the upper hemispheric area of said reflector 5, which preferably consist of the same polymeric material as the reflector 5 shell as such and are arranged at a mutual distance approx. 25 mm and also in contact with said ring 6 for adjusting the height of the light beam.

Fog lights must normally pass the examination within a chamber, in which a forced convection is performed at an increased temperature between 50°C in 70°C, exceptionally up to 80°C. The light source is supplied with electricity, wherein the voltage is between 12,5V and 13,5V depending of expectations of each particular vehicle manufacturer, by which such light should then be used. The bulb 1 of type H11, which was used in this particular case, is foreseen for a nominal power 55W, which is however measured by nominal voltage of 12V. When the actual testing voltage is approx. 13,5V, then the actual power, to which the bulb 1 is exposed, should be approx. 64 V. In this particular case the front light has successfully passed the so-called qualification examination, which was performed at the voltage 13,5V, the temperature 70°C, and the duration of 1h.

When said gap c is reduced below 2,7 mm, then the convection between the reflector 5 and the casing 4 appears to be insufficient. However, in the area of approx. 25 mm in width vertically above the bulb 1 appears to be very useful, if said gap c is narrower than 2,7 mm. As evident in Figs 4 and 5, a step 81 may be foreseen on the reflector 5. In this case the convective column, of hot air, which is available above the light source 1 and is circulating behind the reflector 5, is then split into two partial flows, which are then extended left and right with respect to the central area vertically above the light source 1, which then result in certain decreasing of the temperature of the hot spot on the circumferential portion of the reflector 5 directly above the light source 1, which should be clear on the left side in Fig. 4.

Alternatively said hot air circulation may also be split into two partial flows may also be achieved by means of an extension 82, which is available as a circular segment and is arranged in the circumferential area of the reflector 5. Although such an extension according to Fig. 5 is generally known from the prior art, it is there used for quite other purposes and not for the purposes of protecting said casing against the thermal radiation of the bulb as in this particular case.

Being aware of empirical experiences that any thickness of the walls of the reflector 5 above 1,6 may lead to critical limitations in respect of heat conduction through the reflector 5 shell, the maximal thickness of walls within the most exposed areas was limited to max. 1.6 mm, while in certain particular areas such thickness may even be smaller.

Whenever said reflection layer (vacuum metallized aluminium layer) is available also on those surfaces, which are not illuminated by the light source, then due to low emission ability of such layers cooling of reflector by means of emission of thermal IR radiation, which at the temperature above approx. 160°C represents a major mechanism of the heat transfer, is hindered.

In parallel experiments also some other materials were used, by which the glass-transition temperature *Tg* was below 210°C, e.g. polycarbonate copolymers Apec 1895, but such reflectors appears to be unable to withstand the required condition, even though the temperature of the circumference would be some lower.

**Claims**

1.   A vehicle light comprising a reflector (5) consisting of a polymeric material, in particular a headlight for motor vehicles, comprising appropriate casing (4) made of polymeric material, which is furnished on its front side with a transparent glass (3) consisting of appropriate material on the basis of minerals or polymers, as well as of at least approximately circular or oval-shaped surface-directing reflector (5), which is mounted within said casing and surrounded therewith and consists of a polymeric material and is moreover on its reflection surface furnished with a thin reflecting layer on the basis of aluminium, while on the rearward surface thereof appropriate means are foreseen for connecting said reflector (5) with appropriate assembly (6) adapted for positioning said reflector (5) with respect to said cover (4), said light further comprising a bulb (1) with integrated filament (2), which is used as a light source and is placed in the central position of said reflector (5), wherein a characteristic thermal flux density corresponds to $P > 0,6$ W/cm$^2$ and wherein the characteristic size $d$ of said reflector (5), namely a dimension of said reflector (5) along the vertical axis, which extends through the filament (2), is smaller than approximately 90 mm,
**characterized in that**
the reflector (5) is arranged within the casing (4) in such a manner that the width of a gap (**c**) between the circumferential portion of said reflector (5) and each neighboring portion of said casing (4) in the area above the bulb (1) is smaller than approximately 3% of the characteristic size (**d**) of said reflector (5), and is at the same time greater than approximately 3% of the characteristic size (**d**) of said reflector (5) in any other area along the circumference of said reflector (5);
**and in that** each appropriate connecting means (71, 72), which are adapted to connect said reflector (5) with appropriate assembly (6) for adjusting each desired position of said reflector (5) with respect to each position of said casing (4), are arranged outside of the central portion of the upper hemisphere area of said reflector above the bulb (1) where a thickness of the wall of said reflector (5) is preferably smaller than the thickness of any other portions of said reflector (5);
**and in that** the following correlation exists

$$b/P > 17 \qquad [\text{mm cm}^2/\text{W}] \qquad\qquad \text{(i)}$$

where (b) is a distance between the filament (2) of the bulb (1) and the reflector (5), while (P) is a characteristic thermal flux density, which is defined by the following equation (ii)

$$P = I/d^2 \qquad\qquad \text{(ii)}$$

namely a nominal power (*I*) of said bulb (1) used as a light source, divided with a square value of the characteristic size (d) expressed in centimeters [cm].

2. Light according to Claim 1, **characterized in that** said means for connecting said reflector (5) with said position adjusting assembly (6) is available in form of two ribs (71, 72), which are arranged apart from each other, wherein the thickness of the wall of the reflector (5) between them is smaller than in any other area of said reflector (5).

3. Light according to one of the preceding Claims, **characterized in that** said ribs (71, 72) are arranged in such distance apart of each other, that said distance represents at least 20-25% of the characteristic size (d) of the reflector (5), preferably approx. 22% of the characteristic size (d) of the reflector (5).

4. Light according to one of the preceding Claims, **characterized in that** said reflector (5) comprises an area above the bulb (1) where the air flow, which is generated above the bulb (1) and is then circulating behind the rearward portion of the reflector (5), is split into two parts i.e, partial flows.

5. Light according to one of the preceding Claims, **characterized in that** said reflector (5) consists of polyether sulphone.

6. Light according to one of the preceding Claims, **characterized in that** the shell of said reflector (5) consists of an amorphous thermoplastics having a glass-transition temperature $Tg > 210°$C.

7. Light according to one of the preceding Claims, **characterized in that** such light belongs to vehicle headlights, namely a front headlight and/or a fog light and/or a signaling light and/or a cornering light and/or an working reflector.

**Patentansprüche**

1. Fahrzeuglicht umfassend einen aus einem Polymermaterial bestehenden Reflektor (5), insbesondere ein Scheinwerfer für Kraftfahrzeuge, umfassend ein entsprechendes Gehäuse (4) aus Polymermaterial, welches an seiner Vorderseite mit einem aus einem entsprechenden Material auf Basis von Mineralien oder Polymeren bestehenden transparenten Glas (3) versehen ist, sowie einen zumindest ungefähr kreis- oder eiförmigen oberflächengerichteten Reflektor (5), welcher innerhalb des Gehäuses angebracht und davon umgeben ist und aus einem Polymermaterial besteht und ferner auf seiner Reflexionsfläche mit einer dünnen reflektierenden Schicht auf Basis von Aluminium versehen ist, während auf der hinteren Oberfläche davon entsprechende Mittel zum Verbinden des Reflektors (5) mit einer entsprechenden Baugruppe (6) vorgesehen sind, die an das Positionieren des Reflektors (5) in Bezug auf das Gehäuse (4) angepasst sind, wobei das Licht ferner eine Glühlampe (1) mit integriertem Glühdraht (2) umfasst, welche als Lichtquelle verwendet wird und in der mittigen Position des Reflektors (5) angeordnet ist, wobei eine charakteristische Wärmestromdichte $P > 0{,}6$ W/cm$^2$ entspricht und wobei die charakteristische Größe d des Reflektors (5), nämlich eine Abmessung des Reflektors (5) entlang der Vertikalachse, welche sich durch den Glühdraht (2) erstreckt, kleiner als ungefähr 90 mm ist,
**dadurch gekennzeichnet, dass**
der Reflektor (5) innerhalb des Gehäuses (4) derart angeordnet ist, dass die Breite eines Zwischenraums (c) zwischen dem Umfangsabschnitt des Reflektors (5) und jedem benachbarten Abschnitt des Gehäuses (4) in dem Bereich über der Glühlampe (1) kleiner als ungefähr 3 % der charakteristischen Größe (**d**) des Reflektors (5) ist und zugleich in irgendeinem anderen Bereich entlang des Umfangs des Reflektors (5) größer als ungefähr 3 % der charakteristischen Größe (**d**) des Reflektors (5) ist;
und dass jedes entsprechende Verbindungsmittel (71, 72), welches an das Verbinden des Reflektors (5) mit der entsprechenden Baugruppe (6) zum Einstellen jeder gewünschten Position des Reflektors (5) in Bezug auf jede Position des Gehäuses (**4**) angepasst ist, außerhalb des mittigen Abschnitts des oberen halbkugelförmigen Bereichs des Reflektors über der Glühlampe (1) angeordnet ist, wo eine Dicke der Wand des Reflektors (5) vorzugsweise kleiner als die Dicke irgendwelcher anderer Abschnitte des Reflektors (5) ist;
und dass die folgende Wechselbeziehung besteht:

$$b/P > 17 \qquad [\text{mm cm}^2/\text{W}] \qquad \text{(i)}$$

wobei (b) ein Abstand zwischen dem Glühdraht (2) der Glühlampe (1) und dem Reflektor (5) ist, während (P) eine charakteristische Wärmestromdichte ist, welche durch die folgende Gleichung (ii) definiert ist:

$$P = I/d^2 \qquad\qquad \text{(ii)}$$

nämlich eine Nennleistung (I) der als Lichtquelle verwendeten Glühlampe (1) dividiert durch einen Quadratwert der charakteristischen Größe (d) ausgedrückt in Zentimeter [cm].

2. Licht nach Anspruch 1, **dadurch gekennzeichnet, dass** das Mittel zum Verbinden des Reflektors (5) mit der Positionseinstell-Baugruppe (6) in Form von zwei Rippen (71, 72) verfügbar ist, welche voneinander entfernt angeordnet sind, wobei die Dicke der Wand des Reflektors (5) zwischen ihnen kleiner als in irgendeinem anderen Bereich des Reflektors (5) ist.

3. Licht nach einem der vorangehenden Ansprüche, **dadurch gekennzeichnet, dass** die Rippen (71, 72) in einem derartigen Abstand voneinander entfernt angeordnet sind, dass der Abstand mindestens 20-25 % der charakteristischen Größe (d) des Reflektors (5), vorzugsweise ungefähr 22 % der charakteristischen Größe (**d**) des Reflektors (5), repräsentiert.

4. Licht nach einem der vorangehenden Ansprüche, **dadurch gekennzeichnet, dass** der Reflektor (5) einen Bereich über der Glühlampe (1) umfasst, wo der Luftstrom, welcher über der Glühlampe (1) erzeugt wird und dann hinter dem hinteren Abschnitt des Reflektors (5) zirkuliert, in zwei Teile, d.h. Teilströme, getrennt wird.

5. Licht nach einem der vorangehenden Ansprüche, **dadurch gekennzeichnet, dass** der Reflektor (5) aus Polyethersulfon besteht.

6. Licht nach einem der vorangehenden Ansprüche, **dadurch gekennzeichnet, dass** die Schale des Reflektors (5) aus einem amorphen thermoplastischen Kunststoff mit einer Glasübergangstemperatur **Tg** > 210 °C besteht.

7. Licht nach einem der vorangehenden Ansprüche, **dadurch gekennzeichnet, dass** ein derartiges Licht zu Fahrzeugscheinwerfern gehört, nämlich zu einem vorderen Scheinwerfer und/oder einem Nebelscheinwerfer und/oder einer Signalleuchte und/oder einem Abbiegelicht und/oder einem Arbeitsreflektor.

**Revendications**

1. Lumière de véhicule comprenant un réflecteur (5) consistant en un matériau polymérique, en particulier un phare pour des véhicules motorisés, comprenant un boîtier (4) approprié constitué d'un matériau polymérique, qui est doté sur son côté avant d'un verre transparent (3) consistant en un matériau approprié à base de minéraux ou de polymères, ainsi qu'un réflecteur (5) à surface directrice approximativement circulaire ou de forme ovale, qui est monté à l'intérieur dudit boîtier et entouré par celui-ci et consiste en un matériau polymérique et est de plus sur sa surface de réflexion doté d'une couche réfléchissante mince à base d'aluminium, tandis que sur la surface arrière de celui-ci, des moyens appropriés sont prévus pour connecter ledit réflecteur (5) avec un ensemble (6) approprié adapté à positionner ledit réflecteur (5) par rapport audit couvercle (4), ladite lumière comprenant en outre une ampoule (1) avec un filament (2) intégré, qui est utilisée comme une source de lumière et est placée dans la position centrale dudit réflecteur (5), dans laquelle une densité de flux thermique caractéristique correspond à $P > 0,6$ W/cm$^2$ et dans laquelle la taille caractéristique d dudit réflecteur (5), à savoir une dimension dudit réflecteur (5) le long de l'axe vertical, qui s'étend à travers le filament (2), est plus petite qu'approximativement 90 mm,
   **caractérisée en ce que**
   le réflecteur (5) est agencé à l'intérieur du boîtier (4) de manière à ce que la largeur d'un espace (c) entre la partie circonférentielle dudit réflecteur (5) et chaque partie voisine dudit boîtier (4) dans la zone au-dessus de l'ampoule (1) soit plus petite qu'approximativement 3% de la taille caractéristique (*d*) dudit réflecteur (5), et soit en même temps plus grande qu'approximativement 3% de la taille caractéristique (d) dudit réflecteur (5) dans une quelconque autre zone le long de la circonférence dudit réflecteur (5) ;
   et **en ce que** chaque moyen de connexion (71, 72) approprié, qui est adapté à connecter ledit réflecteur (5) avec un ensemble (6) approprié pour ajuster chaque position désirée dudit réflecteur (5) par rapport à chaque position dudit boîtier (4), est agencé à l'extérieur de la partie centrale de la zone d'hémisphère supérieur dudit réflecteur au-dessus de l'ampoule (1) où une épaisseur de la paroi dudit réflecteur (5) est préférablement plus petite que l'épaisseur de quelconques autres parties dudit réflecteur (5) ;
   et **en ce que** la corrélation suivante existe

$$b/P > 17 \qquad [\text{mm cm}^2/\text{W}] \qquad (i)$$

   où (b) est une distance entre le filament (2) de l'ampoule (1) et le réflecteur (5), tandis que (P) est une densité de flux thermique caractéristique, qui est définie par l'équation (ii) suivante

$$P = I/d^2 \qquad (ii)$$

   à savoir une puissance nominale (I) de ladite ampoule (1) utilisée comme une source de lumière, divisée par une valeur au carré de la taille caractéristique (*d*) exprimée en centimètres [cm].

2. Lumière selon la revendication 1, **caractérisée en ce que** ledit moyen pour connecter ledit réflecteur (5) avec ledit ensemble (6) d'ajustement de position est disponible sous la forme de deux nervures (71, 72), qui sont agencées espacées l'une de l'autre, dans laquelle l'épaisseur de la paroi du réflecteur (5) entre elles est plus petite que dans une quelconque autre zone dudit réflecteur (5).

3. Lumière selon l'une des revendications précédentes, **caractérisée en ce que** lesdites nervures (71, 72) sont agencées à une distance l'une de l'autre telle que ladite distance représente au moins 20 à 25% de la taille caractéristique (*d*) du réflecteur (5), préférablement approximativement 22% de la taille caractéristique (*d*) du réflecteur (5).

**4.** Lumière selon l'une des revendications précédentes, **caractérisée en ce que** ledit réflecteur (5) comprend une zone au-dessus de l'ampoule (1) où le flux d'air, qui est généré au-dessus de l'ampoule (1) et est ensuite mis en circulation derrière la partie arrière du réflecteur (5), est partagé en deux parties, à savoir des flux partiels.

**5.** Lumière selon l'une des revendications précédentes, **caractérisée en ce que** ledit réflecteur (5) consiste en un polyéthersulfone.

**6.** Lumière selon l'une des revendications précédentes, **caractérisée en ce que** la coque dudit réflecteur (5) consiste en un thermoplastique amorphe ayant une température de transition vitreuse Tg > 210°C.

**7.** Lumière selon l'une des revendications précédentes, **caractérisée en ce qu'**une telle lumière appartient aux phares d'un véhicule, à savoir un phare avant et/ou un antibrouillard et/ou un feu de signalisation et/ou un indicateur de changement de direction et/ou un réflecteur de route.

**Fig. 1**

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03021623 A
- KR 8200527
- CA 1117503
- GB 2130353 A
- CA 2297530
- JP 2001155537 B